# EUROPEAN PATENT SPECIFICATION

(11) **EP 3 607 833 B1**
(45) Date of publication and mention of the grant of the patent: **16.10.2024**
(21) Application number: 18781438.9
(22) Date of filing: 02.04.2018
(51) Int. Cl.: A23L 2/60, A23L 27/30, A23L 27/00, A23L 29/30

(54) **METHOD FOR REDUCING LINGERING SWEET AFTERTASTE**
VERFAHREN ZUR VERMINDERUNG EINES ANHALTENDEN SÜSSEN NACHGESCHMACKS
PROCÉDÉ DE RÉDUCTION D'UN ARRIÈRE-GOÛT SUCRÉ PERSISTANT

(30) Priority: 03.04.2017 JP 2017073828
(43) Date of publication of application: 12.02.2020
(73) Proprietor: Suntory Holdings Limited, Osaka-shi, Osaka 530-8203 (JP)
(72) Inventor: MATSUZAKI Naoyuki, Soraku-gun Kyoto 619-0284 (JP); UEMURA Masahide, Osaka 552-0022 (JP)
(74) Representative: Mewburn Ellis LLP
(86) International application number: PCT/JP2018/014120
(87) International publication number: WO 2018/186352

(56) References cited:
- WO-A1-2007/061795
- WO-A1-2009/016374
- WO-A1-2012/177727
- WO-A1-98/20753
- JP-A- 2011 024 445
- JP-A- 2015 511 498
- JP-A- S53 104 771
- US-A1- 2007 116 835

## Description

### TECHNICAL FIELD

The present invention relates to a method for reducing a sweet lingering (lingering sweet aftertaste) caused by a high-intensity sweetener, and a composition used in the method.

### BACKGROUND ART

Owing to the recent rise in health consciousness, products that use a sweetener with low calorie but high sweetness (herein also referred to as a "high-intensity sweetener"), such as aspartame, stevia, acesulfame K and sucralose, have been increasing. A high-intensity sweetener has an excellent performance regarding a degree of sweetness which is several times to several tens of thousands times that of sucrose. On the other hand, the sweetener has a disadvantage that sweetness lasts unnecessarily long compared to sucrose, with which a human feels a comfortable taste, causing a sweet lingering which gives an uncomfortable feeling, and the like.

There have been various reports with respect to a method for improving a sweet lingering of a high-intensity sweetener. For example, Patent Document 1 discloses a method that uses erythritol to improve the taste of a non- or low-calorie high-intensity sweetener to provide a flavor profile similar to that of sucrose. Patent Document 2 discloses a method for improving the taste of a high-intensity sweetener using a luo han guo fruit extract. Patent Document 3 discloses a method that uses naringenin or a salt thereof to enhance the sweetness of a sweetness modifier and to reduce the amount of a sweetness modifier. Patent Document 4 describes a natural high-intensity sweetener (NHPS composition) exhibiting a temporal profile and/or a flavor profile similar to those of sucrose. Patent Document 5 describes improvement of the sweetness of a natural sweetener contained in a beverage. Also WO 98/20753 discloses a method for sweetness lingering.

However, even by the methods disclosed in these documents, the effect of reducing a sweet lingering is limited, and thus it is difficult to say that sufficient results have been achieved. In addition, because the improvement of sweetness relies, for example, on the masking effect utilizing flavors peculiar to an additive, there remains a problem, such as deterioration of the taste caused by the additive, or inadequate flavors, and therefore a method achieving adequate improvement of the aftertaste of a high-intensity sweetener has not yet been developed.

### PRIOR ART DOCUMENTS

### Patent documents

Patent Document 1: Japanese Patent Laid-Open No. 2014-87350
Patent Document 2: Japanese Patent Laid-Open No. 2012-205598
Patent Document 3: Japanese Patent Laid-Open No. 2015-188450
Patent Document 4: Japanese Patent Laid-Open No. 2015-130875
Patent Document 5: International Publication No. WO 2008/112991

### SUMMARY OF THE INVENTION

### Problem to be Solved by the Invention

Although various methods for improving the sweet lingering have been proposed as described above, they have not succeeded in reducing the sweet lingering adequately. Further, a method for improving the sweet lingering that does not rely on the masking effect or makes only little use of the masking effect has not yet been provided. Under such circumstances, the present invention is to provide a method for reducing sweet lingering caused by a high-intensity sweetener without relying on a masking effect, and a composition to be used in such a method.

### Means for Solving the Problem

That is, the present invention is as follows. A method for reducing a sweet lingering as claimed in claim 1.

The method according to claim 1, wherein the high-intensity sweetener binds to the site A.

The method according to claim 1 or 2, wherein the compound for reducing a sweet lingering binds to at least one site selected from the group consisting of B, C and D.

The method according to any one of claim 1-3, wherein the sweetener different from the high-intensity sweetener binds to at least one site selected from the group consisting of B, C and D.

The method according to any one of claim 1-3, wherein the high-intensity sweetener binds to the site A, and the compound for reducing a sweet lingering binds to the site B or the site D.

The high-intensity sweetener is at least one selected from the group consisting of rebaudioside A, rebaudioside D, rebaudioside M, stevioside, neotame, alitame, a glycyrrhiza extract, a sucrose derivative, acesulfame K, and saccharin.

The compound for reducing a sweet lingering is at least one selected from the group consisting of trehalose, glucose, lactose, galactose, xylitol, sucrose, sucralose, thaumatin, brazzein, and cyclamic acid.

A sweetener composition as claimed in claim 5.

The composition according to claim 5, containing 200 mg of the compound for reducing a sweet lingering per 1 mg of the high-intensity sweetener.

A food or beverage according to claim 7 and comprising the composition according to claim 5.

The food or beverage according to claim 7, comprising a compound for reducing a sweet lingering at a proportion of about 5 to 95% with respect to the total amount of the food or beverage.

### Effect of the Invention

A method according to the present invention can reduce a sweet lingering caused by a high-intensity sweetener, without relying on a masking effect.

### BRIEF DESCRIPTION OF DRAWINGS

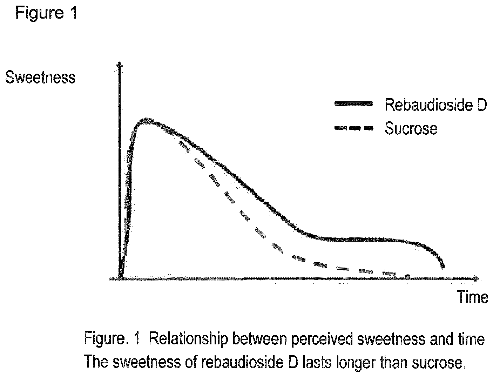

Figure 1 is a schematic diagram showing sweetness lingering.

### MODES FOR CARRYING OUT THE INVENTION

The present invention will be described in detail below. The following embodiments are examples for explaining the present invention, and it is not intended to limit the present invention to the embodiments. The present invention can be implemented in various forms without departing from the gist thereof.

### 1. Method for reducing a sweet lingering caused by high-intensity sweetener

The present invention provides, as the first aspect, a method for reducing a sweet lingering as claimed in claim 1.

In this regard, Method 1 of the present invention and Method 1-1 of the present invention may be also collectively referred to as "the method of the present invention".

Sweetness is induced when a compound causing sweetness binds to a taste receptor.

In general, when a food or beverage containing a sweetener is ingested, the phenomenon in which sweetness continues to be felt intraorally even after the food or beverage is swallowed is known as lingering sweetness. Sweetness linger is insignificant with sweeteners such as sucrose; however, when a high-intensity sweetener is ingested, the sweet lingering lasts longer than that of sucrose, and frequently induces uncomfortable sense of taste (Figure 1). The sweet lingering has been described by DuBois and Prakash ("Non-Caloric Sweeteners, Sweetness Modulators, and Sweetener Enhancers" Annual Reviews of Food Science And Technology, 3, pp.353-380).

"Sweet lingering" means herein sweetness remaining after an elapse of a certain period of time after spitting out a food or beverage containing a sweetener (especially high-intensity sweetener) once put into the mouth. Although there is no particular restriction on the elapsed time, examples thereof include 1 sec, 5 sec, 10 sec, 15 sec, 20 sec, 25 sec, 30 sec, 35 sec, 40 sec, 45 sec, 50 sec, 55 sec, and 60 sec.

In this regard, the sweetness linger is induced by binding of a high-intensity sweetener to at least one site selected from the following four sites of A, B, C, and D.
(A) a VFT part of a taste receptor
(B) a linking part of a taste receptor
(C) a transmembrane domain of a taste receptor, and
(D) a membrane transporter protein of a taste cell.

"Binding" means herein that a bond, which may be a covalent bond or a noncovalent bond (ionic bond, hydrophobic interaction, hydrogen bond, etc.), is formed between a protein and a target chemical substance. Further, binding to a receptor or a membrane transporter protein may take a form, in which a compound and the protein interact with each other by means of substance transport based on a concentration gradient or the like (channel), or substance transport based on a difference in chemical energy or light energy, or in electrochemical potentials (active transporter).

The sweetness taste receptor is formed by a T1R2-T1R3 heterodimer. The respective amino acid sequences of T1R2 and T1R3 are shown below as SEQ ID NOS: 1 and 2. The specific domains of the sites A, B, and C in the amino acid sequences will be described later ("The cysteine-rich region of T1R3 determines responses to intensely sweet proteins". Jiang P, Ji Q, Liu Z, Snyder LA, Benard LM, Margolskee RF, Max M., J Biol. Chem., 2004, 279 (43), pp.45068-45075., "Human receptors for sweet and umami taste.", Li X, Staszewski L, Xu H, Durick K, Zoller M, Adler E., Proc Natl Acad Sci USA. 2002, 99 (7), 4692-4696.).

### Site A: VFT part of taste receptor

The sweetness taste receptor is characterized in that each of the extracellular N-terminal portions of the T1R2 subunit and the T1R3 subunit constituting the heterodimer forms a large region. The amino acid sequences of the extracellular regions correspond, in the T1R2 subunit (SEQ ID NO: 1), to the 1-494 amino acid residue, and in the T1R3 subunit (SEQ ID NO: 2), to the 1-498 amino acid residues. These portions are referred to as site A.

### Site B: Linking part of taste receptor

The linking part of a taste receptor is downstream of the above-described part of site A, and links the site A with a transmembrane domain of the site C described later. The amino acid sequences of this site correspond, in the T1R2 subunit (SEQ ID NO: 1), to the 495-564 amino acid residues, and in the T1R3 subunit (SEQ ID NO: 2), to the 499-567 amino acid residues. This site is referred to as site B.

### Site C: Transmembrane domain of taste receptor

The transmembrane domain of a taste receptor is a C-terminal transmembrane domain consisting of about 300 amino acid residues and is downstream of the site B. The amino acid sequences of this site correspond, in the T1R2 subunit (SEQ ID NO: 1), to the 565-839 amino acid residues, and in the T1R3 subunit (SEQ ID NO: 2), to the 568-852 amino acid residues. This part is referred to as site C.

### Site D: Membrane transporter protein of taste cell

The membrane transporter protein of a taste cell, such as GLUT or SGLT, in general refers to a sugar transporter present on the cell membrane in the oral cavity. The sugar transporter is generally classified into two types of glucose transporter and sodium-coupled sugar transporter, and either of them is referred to as a membrane transporter protein insofar as they are involved in sugar transport. These are collectively called site D.

The four sites of A, B, C and D of the present invention may be sites of a taste receptor or a membrane transporter protein derived from mammals or fish. Preferably, they are sites of a human taste receptor or membrane transporter protein.

In the present invention, a "high-intensity sweetener" means natural sweetener and synthetic sweetener compounds, which have sweetness stronger than that of sucrose, usually at least several times that of sucrose, for example, 10 times or more and 1 million times or less that of sucrose.

There is no particular restriction on a "high-intensity sweetener", insofar as it is capable of binding to the sites of A, B, C, and D, and induces a sweetness linger. Specific examples of the "high-intensity sweetener" include peptide based sweeteners such as aspartame and neotame, sucrose derivatives such as sucralose, synthetic sweeteners such as acesulfame K and saccharin, protein-based sweeteners extracted from plants such as thaumatin and monellin, or other plant extracts containing high-intensity sweetener ingredients, stevia extract, glycyrrhiza extract, luo han guo fruit extract, and sweetener ingredients in such extracts, for example, glycosides obtained from plant extracts such as steviol glycosides such as stevia derivatives including enzyme-treated stevia obtained by treating stevia extract and stevia with an enzyme and adding glucose thereto, and mogroside glycosides obtained by treating luo han guo fruit and luo han guo fruit extract. Examples of the steviol glycoside include stevioside, rebaudioside A, rebaudioside B, rebaudioside C, rebaudioside D, rebaudioside N, rebaudioside O, and rebaudioside M. Examples of the mogroside glycoside include mogroside V. Correspondence relationship between a protein and a high-intensity sweetener is as follows. Those binding to site A include rebaudioside A, rebaudioside D, rebaudioside M, stevioside, a stevia extract, a luo han guo fruit extract, a glycyrrhiza extract, neotame, alitame, a sucrose derivative, acesulfame K, and saccharin. Those binding to site B include thaumatin, and brazzein. Those binding to site C include cyclamic acid.

Glycyrrhiza extract refers to extract mainly based on glycyrrhizinic acid obtained from roots or root tubers of Glycyrrhiza uralensis, Glycyrrhiza inflata or Glycyrrhiza glabra. Examples of the glycyrrhiza extract include glycyrrhiza extract, glycyrrhizin, and licorice extract.

The sucrose derivatives are obtained by replacing an OH group or an H group of sucrose with another substituent, and examples thereof include halogen derivatives of sucrose (sucralose), oxathiazinone dioxide derivatives, sugar alcohol, aldonic acid, and uronic acid.

The high-intensity sweetener is at least one selected from the group consisting of rebaudioside A, rebaudioside D, rebaudioside M, stevioside, neotame, alitame, a glycyrrhiza extract, a sucrose derivative, acesulfame K, and saccharin.

In the present invention, as the high-intensity sweetener, rebaudioside D or rebaudioside M can be suitably used. Rebaudioside D or rebaudioside M can be prepared by treating stevia extract and stevia with an enzyme and have sweetness about 200 times that of sucrose. Additionally, rebaudioside D or rebaudioside M have less negative flavors such as astringent taste and metallic taste, which are observed in rebaudioside A, and have characteristics of sweetness of a good quality and the like, showing promise for use in the field of foods and beverages (NIPPON KAGAKU KAISHI (5), 726 to 735, "Sweet diterpene-glycosides of leaves of Stevia rebaudiana Bertoni -Synthesis and structure-sweetness relationship of rebaudiosides-A, -D, -E, and their related glycosides-", Kasai, Kaneda, Tanaka, Yamasaki, Sakamoto, Morimoto, Okada, Kitahata, and Furukawa). In this manner, when used singly, rebaudioside D or rebaudioside M is superior in that it has little unpleasant taste and has sweetness like sucrose compared to rebaudioside A; however, there arises a problem of sweetness linger in some usage modes.

In the present invention, a "compound for reducing a sweet lingering" means a compound or a combination of compounds having a function of reducing sweetness linger induced by binding of a high-intensity sweetener to at least one site selected from the following four sites A, B, C, and D. The "compound for reducing a sweet lingering" is a "sweetener different from the high-intensity sweetener".

Reduction in a sweet lingering and the confirmation method thereof will be described later.

The sweetener different from the high-intensity sweetener (compound for reducing a sweet lingering) include thaumatin, brazzein, cyclamic acid, glucose, trehalose, lactose, galactose, xylitol, sucrose, and sucralose.

The correspondence relationship of binding between the taste receptor sites or a membrane transporter protein, and the sweetener different from the high-intensity sweetener (compound for reducing a sweet lingering) is as follows. Those binding to site A include rebaudioside A, rebaudioside D, rebaudioside M, stevioside, stevia extract, luo han guo fruit extract, glycyrrhiza extract, neotame, alitame, sucrose derivative, acesulfame K and saccharin. Those binding to site B include thaumatin, and brazzein. Those binding to site C include cyclamic acid. Those binding to site D include glucose.

In the method of the present invention, the high-intensity sweetener and the compound for reducing a sweet lingering are different compounds. This is because the two need to bind to different sites among A, B, C, and D.

The "sweetness linger" in the present invention is as described above. Reduction in a sweet lingering means; when the sweetness remaining after an elapse of a certain period of time after spitting out a food or beverage containing a high-intensity sweetener once put into the mouth is compared between a case where the sweetener different from the high-intensity sweetener of the present invention (compound for reducing a sweet lingering) is present and a case where it is absent; that there remains less sweetness in a case where the sweetener different from the high-intensity sweetener of the present invention (compound for reducing a sweet lingering) is present. Alternatively, it means that the sweetness becomes not perceptible in a shorter time period, or decreases in a shorter time period in a case where the sweetener different from the high-intensity sweetener of the present invention (compound for reducing a sweet lingering) is present, when a case where the sweetener different from the high-intensity sweetener of the present invention (compound for reducing a sweet lingering) is present is compared to a case where it is absent. Alternatively, it means that the magnitude of decrease in the sweetness is larger in a case where the sweetener different from the high-intensity sweetener of the present invention (compound for reducing a sweet lingering) is present, when a case where the sweetener different from the high-intensity sweetener of the present invention (compound for reducing a sweet lingering) is present is compared to a case where it is absent. A sweet lingering and the reduction in a sweet lingering can be measured by a known method including the VAS method described later.

A sweet lingering can be measured as a change in sweetness intensity over time by a known method. For example, it can be measured by implementing several times sweetness intensity evaluation using a Visual Analogue Scale (VAS method). With respect to the VAS method, reference can be made to literatures such as J. Jpn. Soc. Stomatognath. Funct. 20 pp. 115-129 ("Construction of a Screening Test for Gustatory Function in Four Basic Tastes" Toyota, et al.). In a specific measurement of the sweetness intensity according to the VAS method, for example, using a chart with a vertical line representing the sweetness intensity as a straight line, for which the lower end is defined as "not sweet at all" and upper end is defined as "sweeter substance not imaginable", the evaluator marks the perceived sweetness intensity at the time on the linear scale for evaluation. Specifically, after ingesting a food or beverage containing a sweetener, the evaluator performs multiple sweetness intensity evaluations according to the VAS method with time intervals, to measure the change in the sweetness intensity over time after ingestion. This method can be considered as one of the Time Intensity methods for measuring or detecting the characteristics of temporal flavor change. With respect to the measurement of lingering, reference can be made, for example, to a literature, Journal of Food Science 80, pp.S2944-S2949, "Chocolate Milk with Chia Oil: Ideal Sweetness, Sweeteners Equivalence, and Dynamic Sensory Evaluation Using a Time-Intensity Methodology" Rodrigues, Paixao, Cruz, Bolini. With respect to a Time Intensity method, reference can be made, for example, to "Shin-Shokukan Jiten (New Food Texture Dictionary)" (Science Forum, p420-421).

In some embodiments, the high-intensity sweetener binds to site A. In this case, the sweetener different from the high-intensity sweetener (compound for reducing a sweet lingering) binds to at least one site selected from the sites A, B, C, and D other than the site to which the high-intensity sweetener has bound (in this embodiment "A") (in this embodiment "at least one site selected from the sites of B, C, and D").

Further in other embodiments, the high-intensity sweetener binds to site A, and the sweetener different from the high-intensity sweetener (compound for reducing a sweet lingering) binds to the site B, C or D. For example, in some embodiments, the high-intensity sweetener binds to the site A and the sweetener different from the high-intensity sweetener (compound for reducing a sweet lingering) binds to the site B or D.

In other embodiments, the high-intensity sweetener binds to site A and the sweetener different from the high-intensity sweetener (compound for reducing a sweet lingering) binds to site B, or the high-intensity sweetener binds to site A and the sweetener different from the high-intensity sweetener (compound for reducing a sweet lingering) binds to site C, or the high-intensity sweetener binds to site A and the sweetener different from the high-intensity sweetener (compound for reducing a sweet lingering) binds to site D.

Alternatively, the high-intensity sweetener binds to site B, and the sweetener different from the high-intensity sweetener (compound for reducing a sweet lingering) binds to site C, D or A.

In other embodiments, the high-intensity sweetener binds to site B and the sweetener different from the high-intensity sweetener (compound for reducing a sweet lingering) binds to site C, or the high-intensity sweetener binds to site B and the sweetener different from the high-intensity sweetener (compound for reducing a sweet lingering) binds to site D, or the high-intensity sweetener binds to site B and the sweetener different from the high-intensity sweetener (compound for reducing a sweet lingering) binds to site A.

Alternatively, the high-intensity sweetener binds to site C, and the sweetener different from the high-intensity sweetener (compound for reducing a sweet lingering) binds to site A, B, or D.

In other embodiments, the high-intensity sweetener binds to site C and the sweetener different from the high-intensity sweetener (compound for reducing a sweet lingering) binds to site A, or the high-intensity sweetener binds to site C and the sweetener different from the high-intensity sweetener (compound for reducing a sweet lingering) binds to site B, or the high-intensity sweetener binds to site C and the sweetener different from the high-intensity sweetener (compound for reducing a sweet lingering) binds to site D.

Furthermore, the high-intensity sweetener binds to site D, and the sweetener different from the high-intensity sweetener (compound for reducing a sweet lingering) binds to site A, B or C.

In yet other embodiments, the high-intensity sweetener binds to site D, and the sweetener different from the high-intensity sweetener (compound for reducing a sweet lingering) binds to site A, or the high-intensity sweetener binds to site D and the sweetener different from the high-intensity sweetener (compound for reducing a sweet lingering) binds to site B, or the high-intensity sweetener binds to site D and the sweetener different from the high-intensity sweetener (compound for reducing a sweet lingering) binds to site C.

Further, in the present invention, it is also envisaged that the above aspects may be combined at the same time. For example, two high-intensity sweeteners bind to two sites selected from the group consisting of A, B, C, and D, and the sweetener different from the high-intensity sweetener (compound for reducing sweetness lingering) binds to a site other than the above two sites.

In the method of the present invention, the high-intensity sweetener and the sweetener different from the high-intensity sweetener (compound for reducing sweet lingering) are used at a ratio of about 1:9 to 9:1, about 3: 7 to 7: 3, about 4:5 to 5:4, about 1:1 to 5:4, or about 1:1 in terms of sweetness intensity. In this regard, the sweetness intensity may be measured by the above-described evaluation method of sweetness intensity using the VAS method.

In the method of the present invention, the high-intensity sweetener and the sweetener different from the high-intensity sweetener (compound for reducing a sweet lingering) may be used at such a ratio that the sweetener different from the high-intensity sweetener (compound for reducing a sweet lingering) is about 1 mg to 200 g with respect to 1 g of the high-intensity sweetener, or the sweetener different from the high-intensity sweetener (compound for reducing a sweet lingering) is about 10 mg to 20 g with respect to 1 g of the high-intensity sweetener.

In embodiments of the present invention, rebaudioside D is used as the high-intensity sweetener, and glucose is used as the sweetener different from the high-intensity sweetener (compound for reducing a sweet lingering). Glucose may be used at a proportion of about 2 to 200 g (0.01 mol to 1.1 mol) with respect to 1 g (0.89 mmol) of rebaudioside D. Further, glucose is used at a proportion of about 5 to 100 g (0.03 mol to 0.56 mol), or about 15 to 25 g (0.08 to 0.14 mol) with respect to 1 g of rebaudioside D. In an embodiment, glucose may be used at a proportion of about 20 g (0.1 mol) with respect to 1 g of rebaudioside D.

In other embodiments of the present invention, rebaudioside D is used as the high-intensity sweetener, and thaumatin is used as the sweetener different from the high-intensity sweetener (compound for reducing a sweet lingering). Thaumatin may be used at a proportion of about 2 to 200 mg (0.09 micromol to 9 micromol) with respect to 1 g of rebaudioside D. Further, preferably thaumatin may be used at a proportion of about 5 to 100 mg (0.23 micromol to 4.5 micromol), about 10 to 25 mg (0.45 micromol to 1.1 micromol) with respect to 1 g of rebaudioside D. In an embodiment, thaumatin may be used at a proportion of about 17 mg (0.77 micromol) with respect to 1 g of rebaudioside D.

Further in another embodiment of the present invention, thaumatin is used as the high-intensity sweetener, and glucose is used as the sweetener different from the high-intensity sweetener (compound for reducing a sweet lingering). Glucose may be used at a proportion of about 12 g (0.07 mol) to 1 mg (0.045 micromol) of thaumatin.

### 2. Composition comprising a high-intensity sweetener (first ingredient) and a sweetener different from the high-intensity sweetener (compound for reducing sweet lingering) (second ingredient)

The present invention provides a composition (hereinafter referred to as "composition of the present invention") comprising the high-intensity sweetener (first ingredient) and the sweetener different from the high-intensity sweetener (compound for reducing a sweet lingering) (second ingredient).

In an embodiment of the present invention, the composition is a sweetener composition comprising:
(i) at least one high-intensity sweetener selected from the group consisting of rebaudioside D and rebaudioside M;
(ii) at least one compound for reducing a sweet lingering selected from the group consisting of glucose, lactose, galactose, xylitol, thaumatin, brazzein and cyclamic acid.

In an embodiment of the present invention, the composition is a sweetener composition comprising:
(i) at least one high-intensity sweetener selected from the group consisting of rebaudioside D, and rebaudioside M;
(ii) at least one sweetener different from the high-intensity sweetener selected from the group consisting of glucose, lactose, galactose, xylitol, thaumatin, brazzein and cyclamic acid.

In embodiments, the sweetener composition reduces a sweet lingering caused by binding of the high-intensity sweetener to at least one site selected from the following four sites of A, B, C, and D,
(A) a VFT part of a taste receptor
(B) a linking part of a taste receptor
(C) a transmembrane domain of a taste receptor, and
(D) a membrane transporter protein of a taste cell.

In the embodiment, the reduction in a sweet lingering can be achieved by binding of the sweetener different from the high-intensity sweetener (compound for reducing a sweet lingering) to at least one site selected from the sites A, B, C, and D other than the site to which the high-intensity sweetener has bound.

In the present invention, "binding" is as already described. Also, sites A, B, C, and D are as defined above.

In the present invention, "sweet lingering" and its measuring method are as described above.

Although the " high-intensity sweetener" is as defined above, in embodiments of the composition of the present invention, it is at least one selected from the group (i) consisting of rebaudioside D and rebaudioside M. Rebaudioside D and rebaudioside M bind to the site A. However in other aspects, the high-intensity sweetener may be at least one selected from the group consisting of rebaudioside A, rebaudioside D, rebaudioside M, stevioside, neotame, alitame, a glycyrrhiza extract, a sucrose derivative, acesulfame K and saccharin, or the high-intensity sweetener may be any one selected from specific examples of the " high-intensity sweetener" described relevant to the method of the present invention.

The "compound for reducing a sweet lingering", and the "sweetener different from the high-intensity sweetener" are as defined above, and in embodiments of the composition of the present invention, it is at least one selected from the group (ii) consisting of glucose, lactose, galactose, xylitol, thaumatin, brazzein and cyclamic acid. However, in other aspects, the sweetener different from the high-intensity sweetener (compound for reducing a sweet lingering) may be at least one selected from the group consisting of trehalose, erythritol, glucose, lactose, galactose, xylitol, sucrose, sucralose, thaumatin, brazzein and cyclamic acid. Further, the sweetener different from the high-intensity sweetener (compound for reducing a sweet lingering) may be any one selected from specific examples of the "compound for reducing a sweet lingering" described relevant to the method of the present invention.

In an embodiment, the high-intensity sweetener binds to the site A. In this case, the sweetener different from the high-intensity sweetener (compound for reducing a sweet lingering) binds to at least one site selected from the sites A, B, C, and D other than the site to which the high-intensity sweetener has bound (in this embodiment except "A") (in this embodiment "at least one site selected from the sites of B, C, and D").

Further in other embodiments, the high-intensity sweetener binds to site A, and the sweetener different from the high-intensity sweetener (compound for reducing a sweet lingering) binds to site B, C or D. For example, in an embodiment, the high-intensity sweetener binds to the site A and the sweetener different from the high-intensity sweetener (compound for reducing a sweet lingering) binds to site B or D.

In another embodiment, the high-intensity sweetener binds to site A and the sweetener different from the high-intensity sweetener (compound for reducing a sweet lingering) binds to site B, or the high-intensity sweetener binds to site A and the sweetener different from the high-intensity sweetener (compound for reducing a sweet lingering) binds to site C, or the high-intensity sweetener binds to site A and the sweetener different from the high-intensity sweetener (compound for reducing a sweet lingering) binds to site D.

Alternatively, the high-intensity sweetener binds to site B, and the sweetener different from the high-intensity sweetener (compound for reducing a sweet lingering) binds to site C, D or A.

Further in another embodiment, the high-intensity sweetener binds to site B and the sweetener different from the high-intensity sweetener (compound for reducing a sweet lingering) binds to site C, or the high-intensity sweetener binds to site B and the sweetener different from the high-intensity sweetener (compound for reducing a sweet lingering) binds to site D, or the high-intensity sweetener binds to site B and the sweetener different from the high-intensity sweetener (compound for reducing a sweet lingering) binds to site A.

Alternatively, the high-intensity sweetener binds to site C, and the sweetener different from the high-intensity sweetener (compound for reducing a sweet lingering) binds to site A, B, or D.

In another embodiment, the high-intensity sweetener binds to site C and the sweetener different from the high-intensity sweetener (compound for reducing a sweet lingering) binds to site A, or the high-intensity sweetener binds to site C and the sweetener different from the high-intensity sweetener (compound for reducing a sweet lingering) binds to site B, or the high-intensity sweetener binds to site C and the sweetener different from the high-intensity sweetener (compound for reducing a sweet lingering) binds to site D.

Furthermore, the high-intensity sweetener binds to site D, and the sweetener different from the high-intensity sweetener (compound for reducing a sweet lingering) binds to site A, B or C.

In yet another embodiment, the high-intensity sweetener binds to site D, and the sweetener different from the high-intensity sweetener (compound for reducing a sweet lingering) binds to site A, or the high-intensity sweetener binds to site D and the sweetener different from the high-intensity sweetener (compound for reducing a sweet lingering) binds to site B, or the high-intensity sweetener binds to site D and the sweetener different from the high-intensity sweetener (compound for reducing a sweet lingering) binds to site C.

Further, in the present invention, it is also envisaged that the above aspects may be combined at the same time. For example, two high-intensity sweeteners bind to two sites selected from the group consisting of A, B, C, and D, and the sweetener different from the high-intensity sweetener (compound for reducing a sweet lingering) binds to a site other than the above two sites.

In the composition of the present invention, the high-intensity sweetener and the sweetener different from the high-intensity sweetener (compound for reducing a sweet lingering) may be included at the ratio of about 1:10 to 10:1, about 1:9 to 9:1, about 2:8 to 8:2, about 3:7 to 7:3, about 4:6 to 6:4, about 4:5 to 5:4, about 1:1 to 5:4, or about 1:1 in terms of sweetness intensity. In this regard, the sweetness intensity may be measured by the above-described evaluation method of sweetness intensity using the VAS method.

Alternatively, in the composition of the present invention, the high-intensity sweetener and the sweetener different from the high-intensity sweetener (compound for reducing a sweet lingering) may be included at the molar ratio of about 10 to 200000, about 100 to 20000, about 500 to 4000, or about 1000 to 2000.

In the composition of the present invention, the high-intensity sweetener and the sweetener different from the high-intensity sweetener (compound for reducing a sweet lingering) may be included at such a ratio that the sweetener different from the high-intensity sweetener (compound for reducing a sweet lingering) is about 1 mg to 200 g with respect to 1 g of the high-intensity sweetener, or the sweetener different from the high-intensity sweetener (compound for reducing a sweet lingering) is about 10 mg to 20 g with respect to 1 g of the high-intensity sweetener.

In an embodiment of the present invention, rebaudioside D is used as the high-intensity sweetener, and glucose is used as the sweetener different from the high-intensity sweetener (compound for reducing a sweet lingering). Glucose may be included at a proportion of about 2 to 200 g (0.01 mol to 1.1 mol) with respect to 1 g (0.89 mmol) of rebaudioside D. Further, glucose may be included at a proportion of about 5 to 100 g (0.03 mol to 0.56 mol), or about 15 to 25 g (0.08 to 0.14 mol) with respect to 1 g of rebaudioside D. In an embodiment, glucose may be included at a proportion of about 20 g (0.1 mol) with respect to 1 g of rebaudioside D.

In another embodiment of the present invention, rebaudioside D is used as the high-intensity sweetener, and thaumatin is used as the sweetener different from the high-intensity sweetener (compound for reducing a sweet lingering). Thaumatin may be included at a proportion of about 2 to 200 mg (0.09 micromol to 9 micromol) with respect to 1 g of rebaudioside D. Further, preferably thaumatin may be included at a proportion of about 5 to 100 mg (0.23 micromol to 4.5 micromol), about 10 to 25 mg (0.45 micromol to 1.1 micromol) with respect to 1 g of rebaudioside D. In an embodiment, thaumatin may be included at a proportion of about 17 mg (0.77 micromol) with respect to 1g of rebaudioside D.

Further in another embodiment of the present invention, thaumatin is used as the high-intensity sweetener, and glucose is used as the sweetener different from the high-intensity sweetener (compound for reducing a sweet lingering). Glucose may be included at a proportion of about 12 g (0.07 mol) with respect to 1 mg (0.045 micromol) of thaumatin.

### (Food or beverage containing composition)

In another embodiment, the present invention provides a food or beverage containing the composition of the present invention (hereinafter referred to as "a food or beverage of the present invention"). In the present invention, the "food or beverage" includes solids, fluids, and liquids, and mixtures thereof and is a generic name of orally-ingestible ones. Examples of the food or beverage of the present invention include nutritional supplement foods and beverages, health foods and beverages, functional foods and beverages, foods and beverages for infants, infant milk formulas, premature infant milk formulas, and geriatric foods and beverages.

Nutritional supplement foods and beverages refer to foods and beverages in which a specific nutritional ingredient is fortified. Health foods and beverages refer to foods and beverages that are healthful or are considered good for health, and include nutritional supplement foods and beverages, natural foods and beverages, diet foods and beverages. Functional foods and beverages refer to foods and beverages for supplying a nutritional ingredient that fulfils regulatory functions of the body, being synonymous with foods for specified health uses. Foods and beverages for infants refer to foods and beverages that are provided to children aged up to about six. Geriatric foods and beverages refer to foods and beverages processed to be digested and absorbed more easily than non-processed foods and beverages. Infant milk formulas refer to milk formulas to be provided to infants aged up to about one. Premature infant milk formulas refer to milk formulas to be provided to premature infants until about six months after birth.

Forms of the foods and beverages are not particularly limited, and various forms may be taken. Examples of such forms include beverages, confectionery, and supplements. The beverages may be either of alcoholic beverages or non-alcoholic beverages. Examples of the non-alcoholic beverages include, but not limited to, non-alcoholic beer, malt beverages, lactobacillus beverages, cocoa, sports drinks, nutritional supplement drinks, tea beverages, coffee beverages, carbonated beverages, functional beverages, fruit and vegetable beverages, milk-based beverages, soy milk beverages, and flavour water.

The non-alcoholic beer herein, which means a carbonated beverage having a beer-like flavor, is a non-fermented non-alcoholic type, substantially free of alcohol. Here, non-alcoholic beer is not intended to exclude beverages containing a trace amount of alcohol at an undetectable level.

When the composition of the present invention is a tea beverage, the composition is preferably a black tea beverage or sugarless tea beverage. Examples of the sugarless tea beverage include green tea beverages, oolong tea beverages, barley tea beverages, brown rice tea beverages, adlay tea beverages, and sugarless black tea beverages. The coffee beverage may be either container-packed coffee or liquid coffee.

Forms of the carbonated beverage are preferably cola-flavored beverages, transparent carbonated beverages, ginger ale, fruit juice-based carbonated beverages, milk-containing carbonated beverages, or sugarless carbonated beverages. Examples of the functional beverage include sports drinks, energy drinks, health support beverages, and jelly pouches.

Examples of the fruit and vegetable beverage include 100% fruit beverages, fruit-containing beverages, low fruit juice-content refreshing beverages, fruit granule-containing fruit beverages or fruit pulp-containing beverages. Examples of the milk-based beverage include milk, drink yogurt, lactobacillus beverages, or milk-containing refreshing beverages, and examples of the soy milk beverage include soy milk or soy beverages.

Examples of an alcoholic beverage include beer, chuhai (shochu highball), a spirit (such as gin, vodka, rum, tequila, miscellaneous new spirits, and ethanol for use as a feedstock), a liqueur, a whisky (such as whiskey, and brandy), a shochu, a brewage, such as sake, wine, shaoxing rice wine, baijiu, and makgeolli. Here, alcoholic beverages may be those containing alcohol at a detectable level and contain, for example, 1% by volume or more, 2% by volume or more, 3% by volume or more, 4% by volume or more, and 5% by volume or more of alcohol.

Examples of processed food include processed foods of cereal, seafood, and meat (such as bread, noodles, tortilla, pasta, ham, bacon, sausage, steamed fish paste cakes, fried fish paste cakes, and puffy fish cakes).

Examples of milk product include butter, cheese, yogurt, and ghee.

Examples of the confectionery include, but not limited to, candy, jam, chewing gum, ice cream, snack food, cookies, biscuits, cakes, wafers, sweet buns, chocolate, and Japanese sweets.

The food or beverage of the present invention also may be in the form of pharmaceutical products or quasi-pharmaceutical products such as fine granules, tablets, granules, powders, capsules (including soft capsules and hard capsules), chewable agents, and syrups, or may be in a processed form where the composition of the present invention is blended in protein, sugar, fat, trace elements, vitamins, an emulsifier, a fragrance, and the like, such as natural liquid food, half-digested nutrient food, and elemental diet, drink preparations, and enteral nutrients.

A food or beverage of the present invention may be in a form in which both the first ingredient and the second ingredient of the composition of the present invention are already contained. Alternatively, a food or beverage of the present invention may be in a form in which first only the first ingredient is contained and the second ingredient is added immediately before ingestion. Furthermore, a food or beverage of the present invention may be in a form in which first only the second ingredient is contained, and the first ingredient is added immediately before ingestion. Further, it may be in a form in which two parts containing separately either of the first ingredient or the second ingredient are incorporated.

In a food or beverage of the present invention, the composition of the present invention may be added at a content of about 0.001% to 99%, preferably about 0.01% to 95% by weight, about 0.1% to 90%, about 1 to 85% by weight, about 10 to 80% by weight, about 25 to 75% by weight, or about 30% by weight to 70% by weight with respect to the total amount.

A food or beverage of the present invention may be produced by performing a step of adding the first ingredient and the second ingredient of the composition of the present invention to (1) a food or beverage raw material, (2) an intermediate product, or (3) a final form of food or beverage. In doing so, the first ingredient and the second ingredient may be added at the same time, or added at different production process points.

In a case where they are added at the same time, the first ingredient and the second ingredient may be added to any of a food or beverage raw material, an intermediate product, or a final form of food or beverage.

In a case where the first ingredient and the second ingredient are added at different production process points, for example, it is possible that the first ingredient is added to a food or beverage raw material, and the second ingredient is added to an intermediate product of food or beverage, or the first ingredient is added to an intermediate product of food or beverage, and the second ingredient is added to a final form of food or beverage, or the first ingredient is added to a final form of food or beverage, and the second ingredient is added to a food or beverage raw material. Alternatively, it is possible that the second ingredient is added to a food or beverage raw material, and the first ingredient is added to an intermediate product of food or beverage, or the second ingredient is added to an intermediate product of food or beverage, and the first ingredient is added to a final form of food or beverage, or the second ingredient is added to a final form of food or beverage, and the first ingredient is added to a food or beverage raw material.

In the present application, the term "at least" means that the number of a specific item may be equivalent to the number given or more. Additionally, in the present application, the term "about" means that the subject is in the range of the numerical value preceded by "about" ±25%, ±10%, ±5%, ±3%, ±2%, or ±1%. For example, "about 10" means the range of 7.5 to 12.5.

### EXAMPLES

The present invention will be described specifically by referring to the Examples below, but the scope of the present invention is not restricted by the following Examples.

### Evaluation method of sweetness lingering

(1) A reference solution α (a beverage containing only a high-intensity sweetener as a sweetener), a reference solution β (a beverage containing another sweetener and having the same sweetness intensity as the reference solution α), and a sample solution γ (a beverage composed of a mixture of the reference solutions α and β at a predetermined ratio as a sample solution) are prepared in individual cups.
(2) The mouth is rinsed thoroughly with water and emptied. This rinsing process is repeated four times.
(3) A defined amount (10 ml) of the reference solution α, or β, or the sample solution γ is put in the mouth in one breath, and spit out after 5 sec.
(4) With respect to the sweetness intensity immediately after spitting out a sweetness intensity rating was obtained by the VAS method.
(5) With respect to the sweetness intensity 45 sec after spitting out a sweetness intensity rating was obtained by the VAS method.

The magnitude of a sweet lingering is expressed by an index defined by the decrement of the sweetness intensity rating from immediately after spitting out to 45 sec after spitting out. When the index value is lower, namely the sweetness attenuates less with time, it may be judged that the sweet lingering is more intensive.

### Evaluation method of the effect of prevetiting sweet lingering according to the present invention

A sweet lingering was measured by the above-described method of with respect to each of 3 solutions of a reference solution α, a reference solution β, and a sample solution γ composed thereof, which were adjusted to the same sweetness intensity. The order of the measurements was determined randomly for each evaluator. Next, the theoretical value of the sweet lingering of a sample solution γ is determined from the blend ratio (A:B) of the reference solution α to the reference solution β. In this regard, the sweet lingering of a sample solution γ is considered to vary depending on the blend ratio of the reference solution α to the reference solution β. Therefore, as the theoretical value of the sweet lingering of a sample solution γ, the weighted average value of the sweet lingering weighted according to the blend ratio of the reference solution α to the reference solution β was calculated ((A x sweet lingering of reference solution α + B x sweet lingering of reference solution β) / (A + B)). In this regard, putting the weighted average value as 1, the value obtained by subtracting 1 from the ratio of the found value of the sweet lingering of a sample solution γ (sweet lingering of a sample solution γ / theoretical value) is regarded as an index of the effect of reducing a sweet lingering.

In the following Examples, this value was multiplied by 100 to give a percentage value, and when such index is less than 10, it is judged that there is no preventing effect on sweet lingering, and when the index is 10 or more, it is judged that there is a preventing effect on sweet lingering.

With respect to the sweet lingering caused by a high-intensity sweetener binding to site A, the difference in effect of a sweetener different from the high-intensity sweetener (compound for preventing a sweet lingering) due to the difference in the binding site was examined. Examples, in which rebaudioside D was used as a high-intensity sweetener binding to site A, and glucose, thaumatin, or fructose was used as a sweetener different from the high-intensity sweetener (a compound for preventing a sweet lingering) are described.

### Example 1

A test was carried out using a rebaudioside D solution and a glucose solution.

Rebaudioside D was used as a high-intensity sweetener with a sweet lingering. Rebaudioside D binds to the VFT part of a taste receptor (site A). Meanwhile, glucose is known to bind to a glucose transporter part (site D) outside the receptor.

As a reference solution α1, a solution in which rebaudioside D was dissolved in deionized water at a weight concentration of 593 ppm was prepared. As a reference solution β1, a solution in which glucose was dissolved in deionized water at a weight concentration of 12.3% was prepared so that the sweetness intensity became the same as the reference solution α1. As a sample solution γ1, a solution was prepared by mixing the reference solution α1 and the reference solution β1 at a ratio of 1:1.

A sensory panel (N = 4) skilful in sensory evaluation participated in the evaluation.

Each panel evaluated the respective sweet lingering of the reference solutions α1, and β1, and the sample solution γ1 by the above-described method. With respect to each of the reference solutions α1, and β1, and the sample solution γ1, an average value of the 4 panels was calculated and used as the sweet lingering index value of each solution.

Table 1 shows the sweet lingering index value of each solution. Using these values, the effect of reducing a sweet lingering by glucose was calculated by the above method to find 46% (51/34.8 - 1). It was demonstrated that glucose which was a sweetener binding to site D had an effect of preventing a sweet lingering with respect to rebaudioside D which was a high-intensity sweetener binding to site A.

**Table 1**

| | Sweet lingering index value |
|---|---|
| Reference solution α1 (Aqueous solution of rebaudioside D) | 29.7 |
| Reference solution β1 (Aqueous solution of glucose) | 39.8 |
| Weighted average value of reference solutions α1 and β1 | 34.8 |
| Sample solution γ1 | 51.0 |

### Example 2

A test was carried out using a rebaudioside D solution and a thaumatin solution. Rebaudioside D binds to the VFT part of a taste receptor (site A). Thaumatin is known to bind to a linking part of a taste receptor (site B).

As a reference solution α1, rebaudioside D was dissolved in deionized water at a weight concentration of 593 ppm. As a reference solution β2, thaumatin was dissolved in deionized water at a weight concentration of 9.77 ppm so that the sweetness intensity became the same as the reference solution α1. As a sample solution γ2, a solution was prepared by mixing the reference solution α1 and the reference solution β2 at a ratio of 1:1.

Totalizing the evaluations by panelists in the same manner as in Example 1, the following results were obtained (Table 2).

Using these values, the effect of reducing a sweet lingering by thaumatin was calculated by the above method to find 43% (38.5/27.0 - 1). It was demonstrated that thaumatin which was a sweetener binding to site B had an effect of reducing a sweet lingering with respect to rebaudioside D which was a high-intensity sweetener binding to site A.

**Table 2**

| | Sweet lingering index value |
|---|---|
| Reference solution α1 (Rebaudioside D) | 29.7 |
| Reference solution β2 (Thaumatin) | 24.3 |
| Weighted average value of reference solutions α1 and β2 | 27.0 |
| Sample solution γ2 | 38.5 |

### Comparative Example 1

A test was carried out using a rebaudioside D solution and a fructose solution. Rebaudioside D binds to the VFT part of a taste receptor (site A), and fructose is known to bind to the VFT part of a taste receptor (site A), identically with rebaudioside D.

As a reference solution α1, rebaudioside D was dissolved in deionized water at a weight concentration of 593 ppm. As a reference solution β3, fructose was dissolved in deionized water at a weight concentration of 5.8% so that the sweetness intensity became the same as the reference solution α1. As a sample solution γ3, a solution was prepared by mixing the reference solution α1 and the reference solution β3 at a ratio of 1:1.

Totalizing the evaluations by panellists in the same manner as in Example 1, the following results were obtained (Table 3).

Using these values, the effect of preventing a sweet lingering by fructose was calculated by the above method to find 7% (38/35.4 - 1). It was demonstrated that fructose which was a sweetener binding to site A had extremely weak effect of preventing sweet lingering with respect to rebaudioside D which was a high-intensity sweetener binding to the same site A.

**Table 3**

| | Sweet lingering index value |
|---|---|
| Reference solution α1 (Rebaudioside D) | 29.7 |
| Reference solution β3 (Fructose) | 41.1 |
| Weighted average value of reference solutions α1 and β3 | 35.4 |
| Sample solution γ3 | 38 |

### Example 3

Thaumatin was used as a high-intensity sweetener with a sweet lingering. Glucose was selected as an ingredient to reduce the sweet lingering. Thaumatin binds to the linking part of a taste receptor (site B). Meanwhile, glucose is known to bind to a glucose transporter part (site D) outside the receptor.

As a reference solution α2, thaumatin was dissolved in deionized water at a concentration of 9.77 ppm. As a reference solution β1, glucose was dissolved in deionized water at a concentration of 12.3% so that the sweetness intensity became the same as the reference solution α2. As a sample solution γ4, a solution was prepared by mixing the reference solution α2 and the reference solution β1 at a ratio of 1:1.

The following results were obtained from the panel in the same manner as in Example 1.

Using these values, the effect of glucose in preventing a sweetness linger of thaumatin was calculated by the above method to find 17% (37.6/32.1 - 1). It was demonstrated that glucose which was a sweetener binding to site D had an effect of preventing a sweet lingering with respect to thaumatin which was a high-intensity sweetener binding to site B.

**Table 4**

| | Sweet lingering index value |
|---|---|
| Reference solution α2 (Thaumatin) | 24.3 |
| Reference solution β1 (Glucose) | 39.8 |
| Weighted average value of reference solutions α2 and β1 | 32.1 |
| Sample solution γ4 | 37.6 |

From the above results, the effects of reducing a sweet lingering corresponding to combination patterns of sweeteners binding to the respective sites are summarized in the following table.

**Table 5**

| Combination of stimulated sites | Components | Reducing effect on sweet lingering |
|---|---|---|
| Site A + Site D | Rebaudioside D + glucose | Yes (46%) |
| Site A + Site B | Rebaudioside D + thaumatin | Yes (42%) |
| Site A + Site A (Comparative Example) | Rebaudioside D + fructose | No (7%) |
| Site B + Site D | Thaumatin + glucose | Yes (17%) |

Although no effect of reducing lingering was observed in the test in which the same site was simultaneously stimulated (site A + site A), the effect of reducing lingering was observed in the test in which different sites were simultaneously stimulated (site A + site D, site A + site B, and site B + site D).

Consequently, it was confirmed that sweetness linger could be prevented by simultaneously stimulating different sites.

### Example 4

The following test was carried out for the purpose of finding optimum blend amounts of a high-intensity sweetener binding to site A, and a sweetener binding to site B, C, or D, being a linger alleviating ingredient to reduce the sweet lingering of the high-intensity sweetener. An aqueous solution of rebaudioside D (high-intensity sweetener) and an aqueous solution of glucose (compound to reduce lingering) having the same sweetness intensity were prepared, and the blend ratio of the aqueous solution of rebaudioside D to the aqueous solution of glucose was set at 9:1 for examining the effect of reducing sweet lingering.

With respect to a case where the reference solution α1 and the reference solution β1 were mixed at a ratio of the reference solution α1 to the reference solution β1 of 9:1, the evaluation was performed in the same procedure as in Example 1. As a sample solution γ5, a solution in which the reference solution α1 and the reference solution β1 were mixed at a ratio of 9:1 was prepared.

The following results were obtained by totalizing the evaluations by panellists (N = 3). Using the values, the effect of reducing a sweet lingering was calculated by the above-described method for a case where the ratio of the reference solution α1 to the reference solution β1 was 9:1 to find 11% (23.6/21.3 - 1). Even at a ratio of 9:1, it was demonstrated that glucose had a sufficient effect of preventing a sweet lingering with respect to rebaudioside D.

**Table 6**

| | Sweet lingering index value |
|---|---|
| Reference solution α1 (Rebaudioside D) | 20.7 |
| Reference solution β1 (Glucose) | 27.7 |
| Weighted average value of reference solutions α1 and β1 | 21.3 |
| Sample solution γ5 | 23.6 |

### Example 5

Next, an aqueous solution of rebaudioside D (high-intensity sweetener) and an aqueous solution of glucose (compound to reduce lingering) having the same sweetness intensity were prepared, and the blend ratio of the aqueous solution of rebaudioside D to the aqueous solution of glucose was set at 5:4 for examining the effect of reducing a sweet lingering.

As a reference solution α3, rebaudioside D was dissolved in deionized water at a concentration of 373 ppm. As a reference solution β4, glucose was dissolved in deionized water at a concentration of 7.8% so that it had the same sweetness intensity as the reference solution α3. As a sample solution γ6, a solution was prepared by mixing the reference solution α3 and the reference solution β4 at a ratio of 5:4.

The following results were obtained by totalizing the evaluations by panellists (N = 4). Using the values, the effect of preventing a sweet lingering was calculated by the above-described method for a case where the ratio of the reference solution α3 to the reference solution β4 was 5:4 to find 37.3% (40.3/29.4 - 1). Even at a ratio of 5:4, it was demonstrated that glucose had a sufficient effect of preventing a sweet lingering with respect to rebaudioside D.

**Table 7**

| | Sweet lingering index value |
|---|---|
| Reference solution α3 (Rebaudioside D) | 25.5 |
| Reference solution β4 (Glucose) | 34.2 |
| Weighted average value of reference solutions α3 and β4 | 29.4 |
| Sample solution γ6 | 40.3 |

In addition, also when the ratio of the reference solution α3 to the reference solution β4 was 1:9, a result that the effect of preventing a sweet lingering was 10% or higher was obtained from an evaluation by a small number of panellists.

Based on the results of Examples 1, 5 and 6 above, the relationship between the blend ratio of the rebaudioside D solution to the glucose solution and the effect of preventing a sweet lingering is summarized in the following table, in which, when the preventing effect on the sweet lingering is 10% or more, "O" is entered to indicate that the blend is effective in preventing lingering, and when it is less than 10%, "x" is entered to indicate that the blend is not effective in preventing lingering. Mixing with the glucose solution, an effect of preventing a sweet lingering of the rebaudioside D solution can be obtained. This effect can be observed in a broad blend ratio range of the rebaudioside D solution to the glucose solution over 9:1 to 1:9.

**Table 8**

| Blend ratio (Rebaudioside D: Glucose) | 1:0 | 9:1 | 5:4 | 1:1 | 1:9 | 0:1 |
|---|---|---|---|---|---|---|
| Reducing effect | x | O | O | O | O | x |

| | | | | | | |
|---|---|---|---|---|---|---|
| x: reducing effect on sweetness linger is less than 10% O: reducing effect on sweetness linger is 10% or more | | | | | | |

### Example 6

As in Example 5, as a reference solution α3, a solution in which rebaudioside D was dissolved in deionized water at a concentration of 373 ppm, and as a reference solution β4, a solution in which glucose was dissolved in deionized water at a concentration of 7.8% so that it had the same sweetness intensity as the reference solution α3, were prepared. As a sample solution, solutions in which the reference solution α3 and the reference solution β4 were mixed at ratios of 10:0, 9:1, 7:3, 5:4, 4:5, 3:7, 1:9, and 0:10 respectively were prepared.

For the purpose of performing a more accurate sensory evaluation test, an evaluation was performed by a small number of trained and highly-sensitive panellists (N = 2). Namely, two panellists, who gave consistent rating values in terms of the standard deviation calculated from rating values on sweetness intensity immediately after ingestion with respect to sucrose, fructose and glucose, which were standard sweeteners, performed an evaluation. Based on the collected data of the effect of preventing a sweet lingering of each sample solution described above, the effect of preventing a sweet lingering of each sample solution was evaluated. The results of the tests, in which the ratio of the reference solution α3 to the reference solution β4 was 5:4 or 9:1, are shown in Tables 9 and 10 respectively.

**Table 9: Test results of sweet lingering index value when α3 to β4 is 5:4**

| | Sweet lingering index value |
|---|---|
| Reference solution α3 (Rebaudioside D) | 25 |
| Reference solution β4 (Glucose) | 31 |
| Weighted average value of reference solutions α3 and β4 | 27.7 |
| Sample solution γ6 | 93.8 |

**Table 10: Test results of sweet lingering index value when α3 to β4 is 9:1**

| | Sweet lingering index value |
|---|---|
| Reference solution α3 (Rebaudioside D) | 25 |
| Reference solution β4 (Glucose) | 31 |
| Weighted average value of reference solutions α3 and β4 | 25.6 |
| Sample solution γ6 | 63.8 |

In the same manner as in Table 9 and Table 10 above, the sweet lingering index values were also evaluated with respect to the samples, in which the ratios of the reference solution α3 to the reference solution β4 were set at 10:0, 7:3, 4:5, 3:7, 1:9, and 0:10. The results are shown in Table 11. From the results, it was demonstrated that the preventing effect of glucose on the sweet lingering with respect to rebaudioside D was recognizable at a ratio between the two over a broad range of 9:1 to 1:9 to confirm the same tendency as the results in Examples 1, 5 and 6.

**Table 11**

| | | | | | | | | |
|---|---|---|---|---|---|---|---|---|
| Blend ratio | 10:0 | 9:1 | 7:3 | 5:4 | 4:5 | 3:7 | 1:9 | 0:10 |
| Reducing effect on sweet lingering | x | O | O | O | O | O | O | x |

| | | | | | | | | |
|---|---|---|---|---|---|---|---|---|
| x: reducing effect on sweet lingering is less than 10% O: reducing effect on sweet lingering is 10% or more | | | | | | | | |

### INDUSTRIAL APPLICABILITY

According to the present invention, it is possible to reduce the sweetness linger of a high-intensity sweetener. In addition, the present invention provides compositions for reducing a sweet lingering of a high-intensity sweetener, and a food or beverage in which the sweet lingering of a high-intensity sweetener has been reduced. According to the present invention, it is possible to reduce the sweet lingering of a high-intensity sweetener without causing a deterioration in taste, which is a drawback in a method of improving a sweet lingering by a masking effect.

## Claims

1. A method for reducing sweetness lingering caused by binding of a high-intensity sweetener, being at least one selected from rebaudioside A, rebaudioside D, rebaudioside M, stevioside, neotame, alitame, glycyrrhiza extract, sucrose derivative, acesulfame K and saccharin, to at least one site selected from the following four sites A, B, C, and D:
(A) a VFT part of a taste receptor,
(B) a linking part of a taste receptor,
(C) a transmembrane domain of a taste receptor, and
(D) a membrane transporter protein of a taste cell;
in which method another sweetener, different from said high-intensity sweetener and being at least one selected from trehalose, glucose, lactose, galactose, xylitol, sucrose, sucralose, thaumatin, brazzein and cyclamic acid, binds to at least one site selected from the sites A, B, C and D, other than the site to which said high-intensity sweetener has bound, to reduce the sweet lingering, said high-intensity sweetener and other sweetener being used at a ratio of from about 1:9 to 9:1 in terms of sweetness intensity.

2. Method according to claim 1, wherein said high-intensity sweetener binds to site A.

3. The method according to claim 1 or 2 wherein said other sweetener binds to at least one site selected from B, C and D.

4. Method according to any one of claims 1 to 3 wherein said high-intensity sweetener binds to site A and said other sweetener binds to site B or site D.

5. Sweetener composition comprising:
(i) at least one high-intensity sweetener selected from rebaudioside D and rebaudioside M; and
(ii) at least one other sweetener, selected from glucose, lactose, galactose, xylitol, thaumatin, brazzein and cyclamic acid;
wherein the composition comprises said high-intensity sweetener and said other sweetener at a ratio of from about 1:10 to 10: 1 in terms of sweetness intensity.

6. Composition according to claim 5 containing 200 mg of said other sweetener per 1 mg of said high-intensity sweetener.

7. A food or beverage comprising a composition according to claim 5 or 6.

8. Food or beverage according to claim 7 comprising said other sweetener at a proportion of about 5 to 95% with respect to the total amount of the food or beverage.

## Patentansprüche

1. Verfahren zum Verringern von anhaltender Süße, die durch die Bindung eines hochintensiven Süßstoffs, der zumindest einer, ausgewählt aus Rebaudiosid A, Rebaudiosid D, Rebaudiosid M, Steviosid, Neotam, Alitam, Glycyrrhiza-Extrakt, Saccharosederivat, Acesulfam K und Saccharin ist, an zumindest eine Stelle bewirkt wird, die aus den folgenden vier Stellen A, B, C und D ausgewählt ist:
(A) einem VFT-Teil eines Geschmacksrezeptors,
(B) einem Verbindungsteil eines Geschmacksrezeptors,
(C) einer Transmembrandomäne eines Geschmacksrezeptors und
(D) einem Membrantransporterprotein einer Geschmackszelle;
wobei in dem Verfahren ein weiterer Süßstoff, der sich von dem hochintensiven Süßstoff unterscheidet und zumindest einer, ausgewählt aus Trehalose, Glucose, Lactose, Galactose, Xylit, Saccharose, Sucralose, Thaumatin, Brazzein und Cyclaminsäure ist, sich an zumindest eine andere aus den Stellen A, B, C und D ausgewählte Stelle bindet als die Stelle, an die sich der hochintensive Süßstoff gebunden hat, um die anhaltende Süße zu verringern, wobei der hochintensive Süßstoff und der andere Süßstoff in einem Verhältnis der Süßungsintensität von etwa 1:9 bis 9:1 eingesetzt werden.

2. Verfahren nach Anspruch 1, wobei sich der hochintensive Süßstoff an Stelle A bindet.

3. Verfahren nach Anspruch 1 oder 2, wobei sich der andere Süßstoff an zumindest eine aus B, C und D ausgewählte Stelle bindet.

4. Verfahren nach einem der Ansprüche 1 bis 3, wobei sich der hochintensive Süßstoff an Stelle A bindet und sich der andere Süßstoff an Stelle B oder an Stelle D bindet.

5. Süßstoffzusammensetzung, die Folgendes umfasst:
(i) zumindest einen hochintensiven Süßstoff, der aus Rebaudiosid D und Rebaudiosid M ausgewählt ist; und
(ii) zumindest einen anderen Süßstoff, der aus Glucose, Lactose, Galactose, Xylit, Thaumatin, Brazzein und Cyclaminsäure ausgewählt ist;
wobei die Zusammensetzung den hochintensiven Süßstoff und den anderen Süßstoff in einem Verhältnis der Süßungsintensität von etwa 1:10 bis 10:1 umfasst.

6. Zusammensetzung nach Anspruch 5, die 200 mg des anderen Süßstoffs pro 1 mg des hochintensiven Süßstoffs enthält.

7. Nahrungsmittel oder Getränk, das eine Zusammensetzung nach Anspruch 5 oder 6 umfasst.

8. Nahrungsmittel oder Getränk nach Anspruch 7, das den anderen Süßstoff in einem Anteil von etwa 5 % bis 95 %, bezogen auf die Gesamtmenge des Nahrungsmittels oder des Getränks umfasst.

## Revendications

1. Procédé de réduction la persistance de la sucrosité causée par la liaison d'un édulcorant de haute intensité, choisi parmi rébaudioside A, rébaudioside D, rébaudioside M, stévioside, néotame, alitame, un extrait de glycyrrhiza, un dérivé de saccharose, acésulfame K et saccharine, à au moins un site choisi parmi les quatre sites A, B, C et D suivants :
(A) une partie VFT d'un récepteur de goût,
(B) une partie de liaison d'un récepteur de goût,
(C) un domaine transmembranaire d'un récepteur de goût, et
(D) une protéine transporteuse membranaire d'une cellule gustative ;
procédé dans lequel un autre édulcorant, différent dudit édulcorant de haute intensité et étant au moins un édulcorant choisi parmi tréhalose, glucose, lactose, galactose, xylitol, saccharose, sucralose, thaumatine, braséine et acide cyclamique, se lie à au moins un site choisi parmi les sites A, B, C et D, autre que le site auquel ledit édulcorant de haute intensité s'est lié, pour réduire la persistance du sucre, ledit édulcorant de haute intensité et ledit autre édulcorant étant utilisés à un rapport d'environ 1:9 à 9:1 en termes d'intensité de sucrosité.

2. Procédé selon la revendication 1, dans lequel ledit édulcorant de haute intensité se lie au site A.

3. Procédé selon la revendication 1 ou 2, dans lequel ledit autre édulcorant se lie à au moins un site choisi parmi B, C et D.

4. Procédé selon l'une quelconque des revendications 1 à 3, dans lequel ledit édulcorant de haute intensité se lie au site A et ledit autre édulcorant se lie au site B ou au site D.

5. Composition d'édulcorant, comprenant :
(i) au moins un édulcorant de haute intensité choisi parmi rébaudioside D et rébaudioside M ; et
(ii) au moins un autre édulcorant, choisi parmi glucose, lactose, galactose, xylitol, thaumatine, braséine et acide cyclamique ;
dans laquelle la composition comprend ledit édulcorant de haute intensité et ledit autre édulcorant selon un rapport d'environ 1:10 à 10:1 en termes d'intensité de sucrosité.

6. Composition selon la revendication 5, contenant 200 mg dudit autre édulcorant pour 1 mg dudit édulcorant de haute intensité.

7. Aliment ou boisson comprenant une composition selon la revendication 5 ou 6.

8. Aliment ou boisson selon la revendication 7, comprenant ledit autre édulcorant à une proportion d'environ 5 à 95 % par rapport à la quantité totale de l'aliment ou de la boisson.
